# FASCICULE DE BREVET EUROPEEN

(11) **EP 0 598 637 B1**
(45) Date de publication et mention de la délivrance du brevet: **02.01.1997**
(21) Numéro de dépôt: 93402588.3
(22) Date de dépôt: 21.10.1993
(51) Int. Cl.: B05B 11/00, G01F 11/02, B65D 47/34

(54) **Distributeur à dosage variable pour produits fluides**
Spender mit einstellbarem Dosierer für flüssige Produkte
Variable dosing dispenser for fluid products

(30) Priorité: 22.10.1992 FR 9212660
(43) Date de publication de la demande: 25.05.1994
(73) Titulaire: LIR FRANCE, F-94669 Chevilly-Larue (FR)
(72) Inventeur: Favre, Bernard, F-94669 Chevilly-Larue (FR)
(74) Mandataire: Dawidowicz, Armand

(56) Documents cités:
- EP-A- 0 026 902
- EP-A- 0 410 857
- DE-A- 2 542 118
- GB-A- 1 376 425

## Description

L'invention concerne un distributeur pour produits fluides, tels que des crèmes cosmétiques, du type comprenant un sac souple empli de produit à distribuer et raccordé de manière étanche à une pompe étanche à l'air, un corps enfermant le sac et la pompe et un bouton d'actionnement de ladite pompe muni d'une sortie pour le produit à distribuer. Un tel distributeur est connu du document EP-A-0 410 857.

De telles pompes offrent l'avantage d'une distribution dosée du produit à chaque actionnement de la pompe. Mais la dose ne peut pas être modifiée, ce qui est gênant pour certaines applications. C'est par exemple le cas d'un distributeur-mélangeur qui est constitué de deux pompes, telles que celle qui vient d'être décrite, disposées dans un même boîtier et actionnées simultanément par le même bouton. Il n'est pas possible, avec un tel distributeur-mélangeur, de faire varier la dose de l'un des composants du mélange, donc sa proportion dans le mélange.

La présente invention vise en conséquence à fournir un distributeur du type décrit à l'introduction qui permette de faire varier, de manière simple et économique, la dose fournie à chaque actionnement de la pompe.

A cet effet, le distributeur selon l'invention est caractérisé en ce qu'il comprend un organe mobile intercalé entre l'aval de la pompe et la sortie dans le bouton pour le produit, ledit organe mobile présentant un premier conduit qui, dans une première position de l'organe mobile, met l'aval de la pompe directement en communication avec la sortie dans le bouton et au moins un second conduit comportant un circuit direct et une dérivation, ledit second conduit étant disposé de manière que, pour une seconde position de l'organe mobile, le circuit direct mette l'aval de la pompe en communication avec la sortie dans le bouton alors que la dérivation met l'aval de la pompe en communication avec l'amont de la pompe.

Par un calibrage et une orientation appropriés du circuit direct par rapport à la dérivation dans le second conduit, il est possible, dans la seconde position de l'organe mobile, d'obtenir qu'une portion prédéterminée de la dose de produit éjectée par la pompe arrive à la sortie dans le bouton alors que la portion complémentaire restante est ramenée dans le sac disposé en amont de la pompe.

De préférence, ledit organe mobile est rotatif, de préférence indexé .

Avantageusement, la sortie de produit dans le bouton est obturée par une soupape afin d'éviter la remise à l'air du sac. Cette soupape est de préférence constituée par une pièce munie de deux lèvres en contact élastique, ce qui assure, en plus de l'étanchéité recherchée, une orientation du jet de produit expulsé.

Selon une forme de réalisation de l'invention, le distributeur comprend en outre un second sac raccordé à une seconde pompe étanche à l'air et contenant un second produit à mélanger au produit du premier sac, le bouton étant agencé pour actionner simultanément les deux pompes, ledit organe mobile comprenant un conduit supplémentaire reliant, pour toutes les positions de l'organe mobile, l'aval de la seconde pompe à la sortie dans le bouton. On obtient ainsi un distributeur-mélangeur permettant le dosage de l'un des composants du mélange.

L'invention sera bien comprise à la lecture de la description suivante faite en se référant au dessin annexé dans lequel :
La figure 1 est une vue schématique en coupe axiale d'un distributeur-mélangeur selon un exemple de réalisation de l'invention,
la figure 2 est une vue schématique agrandie en coupe transversale du dispositif de la figure 1,
la figure 3 est une vue en coupe d'une partie d'un distributeur-mélangeur selon une variante, et
la figure 4 est analogue à la figure 2, pour la variante de la figure 3.

Les exemples de réalisation représentés concernent un distributeur-mélangeur pour deux composants dont l'un est amené en doses constantes et l'autre en doses réglables selon trois valeurs différentes.

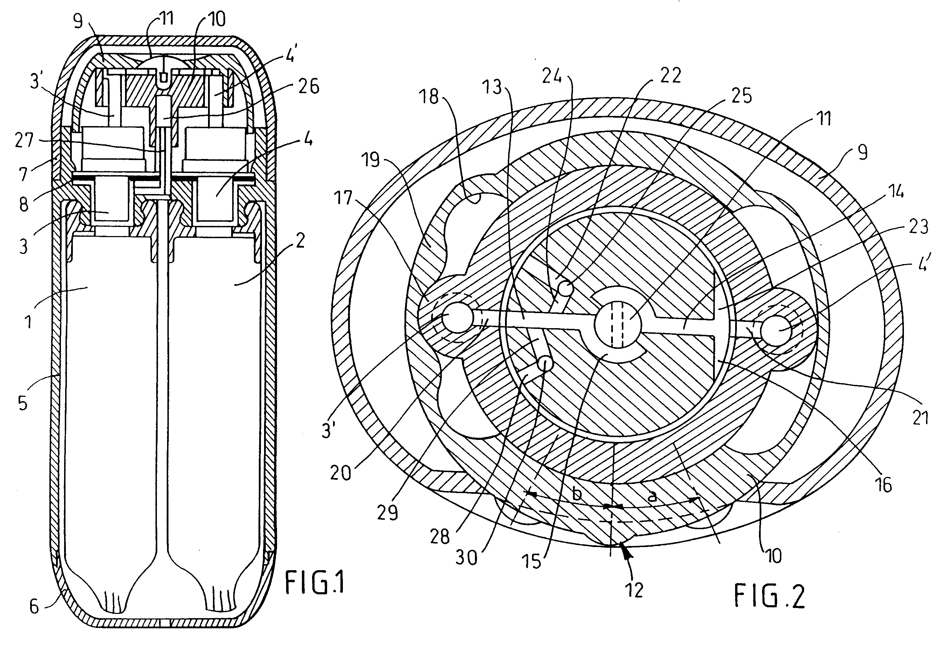

Dans le mode de réalisation des figures 1 et 2, le distributeur comprend deux sacs souples 1 et 2 montés de manière étanche à l'amont de deux pompes étanches à l'air 3 et 4 respectivement. L'ensemble est logé dans un corps 5 fermé à sa partie inférieure par un fond 6. Un couvercle ou une coiffe 7 permet de fermer l'ensemble en dehors des périodes d'utilisation. Les deux pompes 3, 4 sont fixées sur le corps 5 par l'intermédiaire d'un joint commun 8. Un bouton 9 est en appui sur les tubes éjecteurs 3', 4', des pompes 3, 4 de manière à les actionner simultanément.

Un organe rotatif 10, solidaire du bouton 9, est disposé de manière à s'interposer entre l'aval des pompes 3 et 4 et la sortie commune dans le bouton 9, laquelle sortie est fermée par une soupape 11. Cette soupape 11 est avantageusement constituée par une pièce munie de deux lèvres en contact élastique l'une contre l'autre, de manière à se refermer automatiquement pour interdire la pénétration d'air.

L'organe rotatif 10 (figure 2) comporte une saillie d'actionnement 12 accessible de l'extérieur et est muni de deux conduits radiaux diamétralement opposés 13 et 14 dont la portion centrale 15 et 16 respectivement débouche en regard de la soupape 11. L'organe rotatif 10 peut être indexé en trois positions au moyen d'une saillie 17 du bouton 9 coopérant avec des encoches 18 d'une portion souple 19 de l'organe 10.

Dans la position angulaire centrale de l'organe rotatif 9, représentée à la figure 2, les conduits radiaux 13 et 14 sont en regard, par leur extrémité extérieure, avec un canal 20, respectivement 21, du bouton 9 et qui débouche à son autre extrémité sur l'aval 3', 4' des pompes 3, 4. Les doses débitées par chacune des pompes 3, 4 à chaque actionnement du bouton 9 se mélangent en arrivant à la soupape 11 dont les lèvres s'écartent élastiquement pour laisser passer, selon un jet directionnel, le total des deux doses additionnées et mélangées. Si les pompes 3 et 4 sont identiques, les doses débitées sont bien entendu égales.

Dans une position de l'organe 9 décalée d'un angle a par rapport à la position centrale précédente, un conduit 22 est en regard du canal 20 alors que le conduit 14 reste en communication directe avec le canal 21 au moyen d'une embouchure 23. Le conduit 22 communique par un coude 24 avec le conduit 13 et, par une dérivation 25, avec un volume creux 26 qui communique avec le sac 1 par une tubulure 27 (figure 1). La disposition est telle que 60% seulement de la dose éjectée par la pompe 3 arrive à la soupape 11, le reste étant ramené au sac 1 par le volume 26 et la tubulure 27. L'air est enpêché de pénétrer par la fermeture des lèvres de la soupape 11.

Dans une position angulaire décalée de l'angle b, la communication de l'aval 3' de la pompe 3 avec la sortie est assurée par un conduit 28 et un coude 29, une dérivation 30 amenant dans ce cas 70% de la dose éjectée au volume 26.

Le dispositif qui vient d'être décrit est livré au conditionneur avec les sacs 1 et 2, vides et ouverts à leur partie inférieure. Le fond 6 n'est pas monté. Le remplissage des sacs 1 et 2 se fait, pour le produit respectif, par l'extrémité inférieure ouverte. Ces extrémités sont ensuite scellées, par exemple par soudage, et le fond 6 est clipsé.

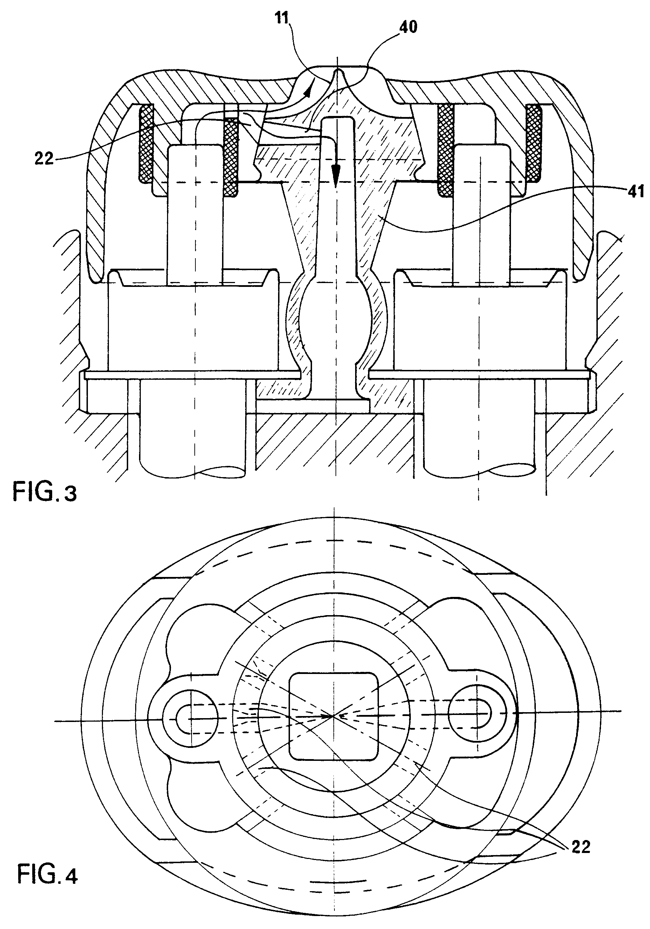

Dans la variante des figures 3 et 4, le retour du surplus est effectué par un canal 40 ménagé dans une pièce fixe 41 en élastomère. La pièce 41 assure simultanément la fonction du joint 8 précédent. La pièce de commande rotative 9 est munie de conduits de calibrage du débit 42 sous forme d'étranglements différents.

## Revendications

1. Distributeur pour produits fluides, tels que des crèmes cosmétiques, du type comprenant un sac souple (1) empli de produit à distribuer et raccordé de manière étanche à une pompe étanche à l'air (3), un corps (5) enfermant le sac (1) et la pompe (3) et un bouton (9) d'actionnement de ladite pompe (3) muni d'une sortie pour le produit à distribuer,
caractérisé en ce qu'il comprend un organe mobile (10) intercalé entre l'aval (3') de la pompe (3) et la sortie dans le bouton (9) pour le produit, ledit organe mobile (10) présentant un premier conduit (13) qui, dans une première position de l'organe mobile (10) met l'aval (3') de la pompe (3) directement en communication avec la sortie dans le bouton (9) et au moins un second conduit comportant un circuit direct et une dérivation (22, 24, 25), ledit second conduit étant disposé de manière que, pour une seconde position de l'organe mobile, le circuit direct (22, 24) mette l'aval (3') de la pompe (3) en communication avec la sortie dans le bouton (9) alors que la dérivation (25) met l'aval (3') de la pompe (3) en communication avec l'amont de la pompe (3).

2. Distributeur selon la revendication 1,
caractérisé en ce que ledit organe mobile (10) est rotatif.

3. Distributeur selon l'une des revendications 1 et 2,
caractérisé en ce que l'organe mobile (10) est indexé (17, 18).

4. Distributeur selon l'une des revendications 1 à 3,
caractérisé en ce que la sortie de produit dans le bouton (9) est obturée par une soupape (11).

5. Distributeur selon la revendication 4,
caractérisé en ce que ladite soupape (11) est constituée par une pièce munie de deux lèvres en contact élastique.

6. Distributeur selon l'une des revendications 1 à 5,
caractérisé en ce qu'il comprend en outre un second sac (2) raccordé à une seconde pompe étanche à l'air (4) et contenant un second produit à mélanger au produit du premier sac (1), le bouton (9) étant agencé pour actionner simultanément les deux pompes (3, 4), ledit organe mobile (10) comprenant un conduit (14) supplémentaire reliant, pour toutes les positions de l'organe mobile (10), l'aval (4') de la seconde pompe (4) à la sortie dans le bouton (9).

7. Distributeur selon la revendication 1,
caractérisé en ce qu'il comprend une pièce fixe (41) en élastomère comportant des canaux (40) d'évacuation du surplus et formant joint pour la pompe (3, 4).

8. Distributeur selon l'une des revendications 1 à 7,
caractérisé en ce que l'organe de commande (9) comprend une pluralité de conduits de calibrage du débit (42) à étranglements différents.

## Claims

1. Distributor for fluid products such as cosmetic creams, of the type comprising a flexible bag (1) filled with the product to be distribued and connected in a sealed manner to an air-sealed pump (3), a body (5) enclosing the bag (1) and the pump (3), and an actuating button (9) for said pump (3) provided with an outlet for the product to be distributed,
characterized in that it includes a movable member (10) interposed between the downstream end (3') of the pump (3) and the outlet in the button (9) for the product, said movable member (10) having a first conduit (13) which in a first position of the movable member (10) places the downstream end (3') of the pump (3) directly in communication with the outlet in the button (9), and at least one second conduit comprising a direct circuit and a branch (22, 24, 25), said second conduit being so arranged that, in a second position of the movable member, the direct circuit (22, 24) places the downstream end (3') of the pump (3) in communication with the outlet in the button (9) while the branch (25) places the downstream end (3') of the pump (3) in communication with the upstream end of the pump (3).

2. Distributor according to claim 1,
characterized in that said movable member (10) is rotatable.

3. Distributor according to one of claims 1 and 2,
characterized in that said movable member (10) is indexed (17, 18).

4. Distributor according to one of claims 1 to 3,
characterized in that the product outlet in the button (9) is closed by a valve (11).

5. Distributor according to claim 4,
characterized in that said valve (11) is constituted by a member provided with two lips in resilient contact with each other.

6. Distributor according to one of claims 1 to 5,
characterized in that it also comprises a second bag (2) connected to a second air-sealed pump (4) and containing a second product to be mixed with the product of the first bag (1), the button (9) being so arranged as to actuate simultaneously the two pumps (3,4), said movable member (10) comprising a supplemental conduit (14) connecting in all positions of the movable member (10) the downstream end (4') of the second pump (4) to the outlet in the button (9).

7. Distributor according to claim 1,
characterized in that it comprises a fixed member (47) of elastomer comprising channels (40) for the outlet of surplus product and forming a joint for the pump (3,4).

8. Distributor according to one of claims 1 to 7,
characterized in that the control member (9) comprises a plurality of debit-calibrating conduits (42) having different size constrictions.

## Patentansprüche

1. Spender für flüssige Produkte, wie etwa kosmetische Cremes, umfassend einen biegsamen Beutel (1), der mit dem auszugebenden Produkt befüllt und dicht mit einer luftdichten Pumpe (3) verbunden ist, einen Körper (5), der den Beutel (1) und die Pumpe (3) umschließt, und einen Knopf (9) zur Betätigung der besagten Pumpe (3), der mit einer Austrittsöffnung für das zu auszugebende Produkt versehen ist , **dadurch gekennzeichnet,** daß er ein bewegliches Organ (10) umfaßt, das zwischen der Auslaßseite (3') der Pumpe (3) und der im Knopf (9) vorgesehenen Austrittsöffnung für das Produkt eingefügt ist, wobei das besagte bewegliche Organ (10) einen ersten Kanal (13) aufweist, der in einer ersten Position des beweglichen Organs (10) die Auslaßseite (3') der Pumpe (3) direkt mit der Austrittsöffnung im Knopf (9) in Verbindung setzt, sowie wenigstens einen zweiten Kanal, der eine Durchlaufleitung und eine Abzweigleitung (22, 24, 25) umfaßt, wobei der besagte zweite Kanal so angeordnet ist, daß bei einer zweiten Position des beweglichen Organs die Durchlaufleitung (22, 24) die Auslaßseite (3') der Pumpe (3) mit der Austrittsöffnung im Knopf (9) in Verbindung setzt, während die Abzweigleitung (25) die Auslaßseite (3') der Pumpe (3) mit der Einlaßseite der Pumpe (3) in Verbindung setzt.

2. Spender nach Anspruch 1,
**dadurch gekennzeichnet,** daß das besagte bewegliche Organ (10) drehbar ausgeführt ist.

3. Spender nach einem der Ansprüche 1 und 2,
**dadurch gekennzeichnet,** daß das bewegliche Organ (10) Rastpositionen aufweist.

4. Spender nach einem der Ansprüche 1 bis 3,
**dadurch gekennzeichnet,** daß die Austrittsöffnung für das Produkt im Knopf (9) durch ein Ventil (11) verschlossen ist.

5. Spender nach Anspruch 4,
**dadurch gekennzeichnet,** daß das besagte Ventil (11) aus einem Teil besteht, das mit zwei Lippen versehen ist, die in elastischem Kontakt stehen.

6. Spender nach einem der Ansprüche 1 bis 5,
**dadurch gekennzeichnet,** daß er außerdem einen zweiten Beutel (2) umfaßt, der mit einer zweiten luftdichten Pumpe (4) verbunden ist und ein zweites Produkt enthält, das mit dem Produkt des ersten Beutels (1) zu vermischen ist, wobei der Knopf (9) so angeordnet ist, daß die beiden Pumpen (3, 4) gleichzeitig betätigt werden, wobei das bewegliche Organ (10) einen zusätzlichen Kanal (14) umfaßt, der bei allen Positionen des beweglichen Organs (10) die Auslaßseite (4') der zweiten Pumpe (4) mit der Austrittsöffnung im Knopf (9) verbindet.

7. Spender nach Anspruch 1,
**dadurch gekennzeichnet,** daß er ein feststehendes Teil (41) aus Elastomer umfaßt, das Kanäle (40) für die Überschußableitung enthält und eine Dichtung für die Pumpe (3, 4) bildet.

8. Spender nach einem der Ansprüche 1 bis 7,
**dadurch gekennzeichnet,** daß das Betätigungsorgan (9) eine Mehrzahl von Kanälen für die Durchsatzeinstellung (42) mit unterschiedlichen Drosselungen aufweist.
